# EUROPEAN PATENT APPLICATION

(11) **EP 1 162 852 A1**
(43) Date of publication of application: **12.12.2001**
(21) Application number: 00610059.8
(22) Date of filing: 09.06.2000
(51) Int. Cl.: H04Q 7/34, H04M 1/247

(54) **Method and system for providing support to a mobile communications unit**

(71) Applicant: Telefonaktiebolaget L M Ericsson (Publ), 126 25 Stockholm (SE)
(72) Inventor: Rignell, Marten, 240 10 Dalby (SE); Öijer, Fredrik, 223 52 Lund (SE)
(74) Representative: Boesen, Johnny Peder

(57) **Abstract**

This invention relates to a method of providing support to a mobile communications unit and comprising the steps of generating a support request at said mobile unit, sending a support message to a remote support location on the basis of said support request, said support message relating to one or more problems, and receiving said support message at said remote support location, wherein said method further comprises the steps of monitoring said support message at said remote support location after reception, generating support information enabling solving of said one or more problems at least partially, and providing said support information at said mobile unit.

The invention also relates to system for the same.

In this way, a simplified, enhanced and more efficient support to at least one mobile communications unit is enabled e.g. automatically.

## Description

The present invention relates to a method of providing support to a mobile communications unit, the method comprising the steps of generating a support request at said mobile unit, sending a support message to a remote support location on the basis of said support request, said support message relating to one or more problems, and receiving said support message at said remote support location.

The present invention also relates to a system for providing support to a mobile communications unit comprising means for generating a support request at said mobile unit, first communications means for sending a support message to a remote support location on the basis of said support request, said support message relating to one or more problems, and second communications means for receiving said support message at said remote support location.

Mobile communications units like mobile telephones, terminals, radio cards, etc. comprise a rapidly changing technological field where the units include an increasing number of advanced features and functionalities of great technical complexity.

Lately, advanced technologies like WAP (Wireless Application Protocol) and GPRS (General Packet Radio Service) products have been introduced in connection with mobile communications units, mobile phones, etc.

Therefore, a further need for configuring these products in an easy and simple fashion has arisen.

The configuration is often done by manually entering a few or several parameters, which is hard to do and understand for an inexperienced person. The complexity and difficulty of entering the appropriate parameters will be solved by features like OTA (Over The Air) configuration where the parameters are transmitted to the mobile unit from the service provider e.g. using SMS (Service Management System) as a carrier.

However, there is still a major risk that users might end up with a non-working or a just partly working product due to the complexity, number and variety of the parameters involved.

The average user will then usually try to get in touch with a support facility from the relevant operator/service provider. The complexity and number of parameters will make it very troublesome and time-consuming and thereby expensive for the support facility to acquire an overview of the problem(s), to solve the problem(s) and to help and guide the user through a proper configuration. Especially when the support is handled over/via the same mobile communications unit that is having the problem(s).

Additionally, since problems with the configuration may cause the mobile unit not to function properly or at all, the user therefore needs access to an additional communications unit in order to explain the problem(s), parameters, and settings of the faulty equipment and to receive the support/help needed to solve the problem(s).

JP 09187062 A discloses a maintenance and service system for a number of communications units like portable telephones, etc. which receive a repair-request from each mobile communications unit and generate a predetermined information/support request based on the need. A number of receptionist units/terminals offer predetermined maintenance and service based on customer and technical information acquired by searching a database as well as various multi-media information received by connection to a support unit/terminal.

The idea is to present information in various multi-media formats to the support staff enabling them to understand the problem more quickly.

This system offers no flexibility, since it only offers predetermined support on the basis of predetermined information or support requests.

JP 11331923 A discloses a fault diagnosis system for a mobile communications unit used in an industrial telephone network where a request is output from the unit, on detecting a failure, to either an automatic diagnosis controller or a fault diagnosis test console which then performs a fault diagnosis test. A switch switches between the controller and the console according to requirement.

JP 200023230 A discloses a remote maintenance system for portable telephones where a remote maintenance apparatus is connected to an information memory via a cable network, thereby enabling high speed communication of maintenance data.

JP 08292986 A discloses a customer support system where a user unit has a memory containing internal state information associated with the user's operation. The currently stored information is transmitted to the customer support centre where the information is displayed.

The object of the invention is to provide a method enabling simplified, enhanced and more efficient support to at least one mobile communications unit.

This object is achieved by a method of the aforementioned type, said method further comprising the steps of
- generating support information enabling solving of said one or more problems at least partially, and
- providing said support information at said mobile unit.

Hereby, information regarding any relevant problems may be sent to a support location, where a solution may be obtained and then provided to the user/the mobile communications unit.

In this way, the user of the mobile communication unit does not have to explain the problem(s) and the actual settings of the unit to the support location. This is especially advantageous, since the use of an extra communications unit is not required, i.e. no need for an communications unit for identifying said problem(s) and the settings, and for another communications unit for communicating with the support location.

Additionally, the support location may also be more efficient since it automatically receives relevant information regarding the problem(s) and corresponding settings/parameters, thus eliminating the need for a user with perhaps no technical knowledge explaining the situation.

The support location hereby avoids or at least minimises the troublesome and time-consuming and thereby expensive tasks of acquiring an overview of and solving the problem(s), while helping and guiding the user through a proper configuration.

In accordance with one embodiment of the method said support request is generated on the basis of one or more of the following
- a user action,
- a message received from said remote support location,
- any internal event like a timer event, an error event, etc., or
- a status check performed at a regular time interval.

In this way, a support request may e.g. be generated on the basis of a user action like selecting a menu item if the user feels his unit does not function properly, and/or on request of the support location e.g. after being contacted by the user, on a timely basis, any internal event like a timer event, an error event and/or a status check checking whether the unit functions properly, performed at a regular time interval.

The request from the support location may also be sent to several mobile units at the same time e.g. to a group of related or unrelated users like users in a company, a geographical region, etc.

Preferably, said support information is provided to the mobile unit by sending a message containing update and/or support information enabling the mobile unit to perform an automatic update of the settings, thereby correcting said one or more problems.

Hereby, a very easy and safe way of updating the unit with the correct parameters, settings, etc. is obtained since the user does not have to do the updating manually, which may avoid further errors due to wrong input.

The update/fixing of the problem(s) may in this way be done automatically.

The update and/or support information may also comprise updated versions of and/or patches to the software and/or firmware modules in the communication units.

Alternatively, the user may handle the update of information in the mobile unit manually.

In a particularly expedient embodiment, said support information is comprised in an SMS message.

Alternatively, other types of message carriers than SMS may be used like e-mail-, FTP-, HTTP-, WAP-carriers, etc.

In accordance with one embodiment of the method said support information comprises information regarding/representing one or more of the following
- one or more unit settings/parameters,
- unit identification,
- status of said mobile unit,
- an internal state of said mobile unit,
- at least one error code,
- at least one version number of software, hardware, firmware, etc. in said mobile communications unit,
- which hardware/physical/functional units/modules that are or have been connected to said mobile unit, or
- other relevant information.

Hereby, information describing the problem(s) and the present state of the mobile unit as well as information regarding the version number of software, hardware, firmware, etc. in the mobile communications unit may be sent directly to the support location, thereby enabling a quicker determination and solution of the problem(s).

Additionally, information regarding the user, the unit such as model make and number as well as which hardware/physical/functional units/modules that are or have been connected with said mobile unit may be comprised in said support message.

The hardware/physical/functional unit may be a part or program to be installed in the mobile unit, most preferably a separate device or program, which is connected to the mobile unit.

Hardware/physical/functional units may be connected to present mobile stations for example by accessories, such as data/fax modem, SMS keyboard, MP3 player, FM radio, etc.

In this way the support location may determine whether unauthorised, unsupported, unlicensed or unofficial equipment, modules, software programs, etc. have been connected or installed in the mobile unit at any time which may cause a void of warranty.

If unique ID numbers and/or codes exist in authorised equipment the information may e.g. be comprised in a list collecting these ID numbers/codes.

The version number of any relevant software and/or firmware modules may be used to determine is an update is relevant and e.g. may correct one or more problems. The updated modules and/or patches may be comprised in the support information/support message.

In a preferred embodiment said mobile unit is a mobile phone.

Alternatively, the mobile communications unit is a mobile phone accessory, a PDA (Personal Digital Assistant), etc. In accordance with another yet embodiment said sending of said support message to said remote support location is based on contact information relating to a phone number or an IP address, said contact information is one or more of the following
- stored in the mobile unit,
- stored on a SIM card,
- entered by a user, or
- a part of said message received from said remote support location.

Hereby, the contact information like a phone number, an IP address, etc. to enable contact with the support location is always ready at hand.

Additionally, if the contact information is part of a message transmitted from the support location, then it is possible to provide contact information directed to a specialised support unit dependent on e.g. the problem, the type of unit, nationality of the user, etc.

Another object of the present invention is to provide a system enabling simplified, enhanced and more efficient support to at least one mobile communications unit.

This object is achieved by a system of the aforementioned type that further comprises
- means for generating support information enabling solving of said one or more problems at least partially, and
- providing said support information at said mobile unit via said second communication means.

The system and embodiments hereof as disclosed in the corresponding claims have the same advantages as the method and embodiments hereof described above for the same reasons.

The present invention will now be described more fully with reference to the drawings, in which
Figure 1 shows a flowchart of an embodiment of the method according to the present invention;
Figure 2 illustrates a mobile communications unit communicating with a service location;
Figure 3 illustrates a preferred embodiment of a mobile communications unit according to the present invention; and
Figure 4 shows a schematic block diagram of an embodiment of the system according to the invention.

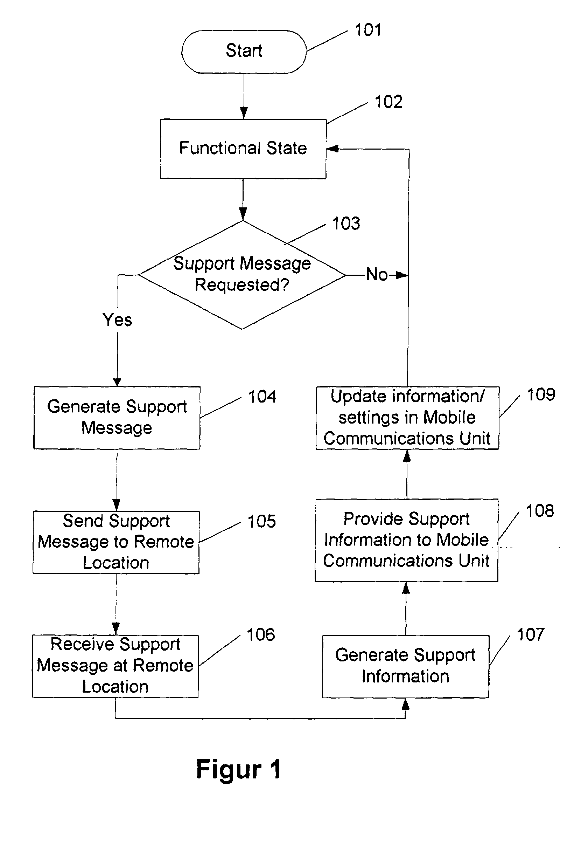

Figure 1 shows a flowchart of an embodiment of the method according to the present invention. In step (101) the method and initial values/parameters, if any, are initialised.

In step (102) the mobile communications unit is in a functional state/mode. This will be the normal working state of a mobile communications unit, comprising an embodiment of the method according to the invention, where the user and/or the mobile unit perform ordinary tasks like communication, receiving/sending an SMS message, etc.

In step (103) a check whether a support message should be generated is executed.

If the test results in 'No' then the unit returns to the functional state in step (102). Otherwise the method proceeds to step (104) where a support message is generated.

The test in step (103) may be executed on the basis of e.g. information received, e.g. an SMS message, from a support centre/location, a user action, e.g. by selecting an appropriate menu item in the mobile unit, an error or a time event, a status check performed at a regular interval in the mobile unit, etc.

In step (104) support information in the form of a support message is generated, comprising information that is useful, relevant and/or interesting to a support team. The information may e.g. comprise relevant unit settings/parameters, unit identification e.g. make and model number, a representation of an internal state of the mobile unit, status of the mobile unit, error code(s) indicating the problem(s), any relevant version numbers of soft-, hard- and/or firmware modules, information regarding which hardware, physical and/or functional units/modules that are or have been connected to the mobile unit, or other relevant information.

After the support message has been generated, the support information/message is sent to a remote support location in step (105).

Preferably, the remote support location is reached via the mobile unit by using a phone number or an IP address on the Internet, which may e.g. be stored in a memory of the mobile communications unit, on the SIM card, be entered by the user, and/or be comprised in the information, e.g. SMS message, received from the support centre.

In step (106) the support message is received at the remote support location, where the message is monitored by a program and/or displayed to at least one service/support person.

In step (107), support information solving the problem(s) of the mobile unit is generated, and then the support information is provided to the mobile unit/the user in step (108).

This support information may e.g. be generated automatically and/or by a person e.g. by accessing one or more databases and/or on the basis of the information comprised in the message received from the mobile unit.

The support information may also comprise patches to or updated versions of current software and/or firmware modules in the mobile communication unit.

Step (108) of providing the support information to the mobile unit preferably comprises OTA configuration, e.g. by including the correct settings, parameters, updates, patches etc. in e.g. an SMS message, which is sent to the mobile unit.

Hereby, the mobile unit may automatically be updated with some or all of the correct settings, parameters, etc. after reception of the SMS message. In this way, the user of the mobile unit does not have to manually perform the update.

Alternatively, the user/mobile unit will just receive a message with the correct settings, parameters, etc. and have to adjust the settings, etc. himself/itself.

In step (109) the mobile unit is updated with information, settings, parameters, etc. solving the problem(s).

After step (109) the mobile unit is returned to its functional state in step (102).

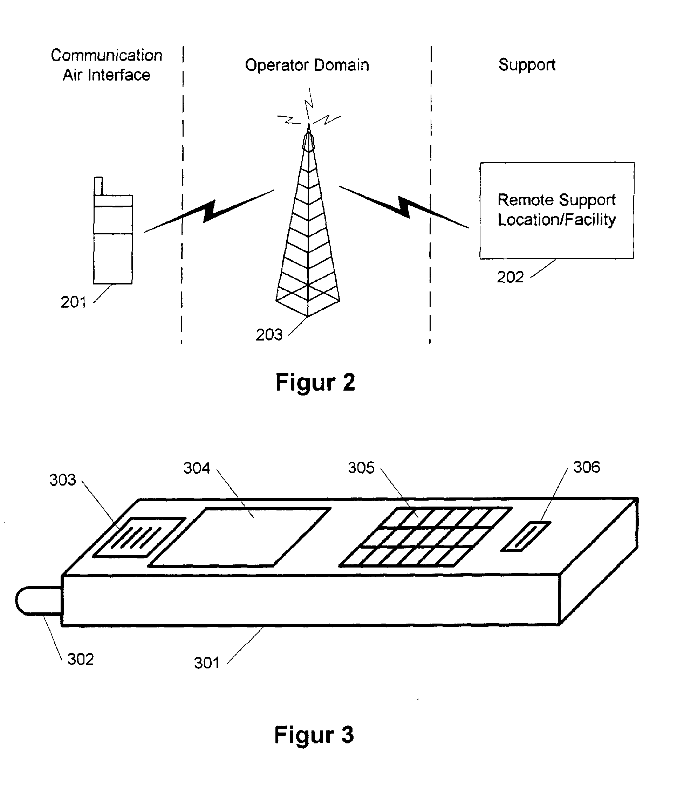

Figure 2 illustrates a mobile communications unit communicating with a service location. Shown is an embodiment of a mobile communications unit (201) and a remote support location/facility (202). The mobile unit (201) and the support location (202) communicate via a communication air interface and an operator domain (203). The air interface may e.g. be a GSM interface, a GPRS interface, etc.

In one embodiment, a support request is generated (or received) in the mobile unit (201). The request may e.g. be generated on the basis of a user action by selecting an appropriate menu item or the like, information received, e.g. an SMS message, from the support location (202), an internal timer or error event, a status check performed at a regular interval in the mobile unit, etc.

After the request is generated, a support message is provided which comprises information that is useful, relevant and/or interesting to a support team and describes the problem, thereby enabling a support team/person to identify and solve the problem. The information may e.g. comprise relevant unit settings/parameters, unit identification e.g. make and model number, a representation of an internal state of the mobile unit, status of the mobile unit, error code(s) indicating the problem(s), version numbers, information regarding which hardware, physical and/or functional units/modules that are or have been connected to the mobile unit, or other relevant information.

The generated support message is then transmitted to the support location (202) via the air interface and one or more operator domains (203). The support location (202) receives the support message and a solution to the one or more problems is determined.

The solution, e.g. in the form of relevant settings, parameters, etc. of the mobile unit (201), is preferably sent as an SMS message to the mobile unit (201) as wireless communication, where the mobile unit (201) is then updated more or less automatically with the new settings.

Alternatively, a person from the support location (202) contacts the mobile unit (201) and tells the user how and what to update.

In this way, the user of the mobile unit (201) receives an enhanced and simplified form of support since the user does not necessarily have to explain the problem, which can be very hard for the average user if he does not know the technical terms, to a support person. The support person simply receives the relevant technical information needed directly from the mobile unit (201).

Additionally, the user does not have to input the correct values, parameters, etc. solving the problem(s), since a message containing these may be sent directly to the mobile unit (201).

The support location (202) is able to provide support more efficiently since less time is needed for receiving information regarding the problem(s), identifying the problem(s) and explaining the solution to the user.

Additionally, if the request for a service message is transmitted from the support location (202) in the form of a message (e.g. after the user has called the support location (202)), then the message from the support location may include a phone number directly to the nearest and/or most relevant service location/department (202).

Figure 3 illustrates a preferred embodiment of a mobile communications unit according to the present invention. Shown is a mobile telephone (301) having display means (304) for displaying information to a user, input means (305) like a keypad, a touch sensitive screen, etc. for entering information, a phone number, operating menu items shown on the displaying means (304), etc., an antenna (302) for transmitting and receiving information wirelessly, sound receiving means (306) e.g. a microphone for receiving sound and sound generating means like a speaker (303) for generating sound. Preferably, the mobile telephone (301) also comprises a microprocessor and a memory (not shown).

According to the present invention such a mobile telephone (301) may enable a simpler, better, enhanced and more efficient support.

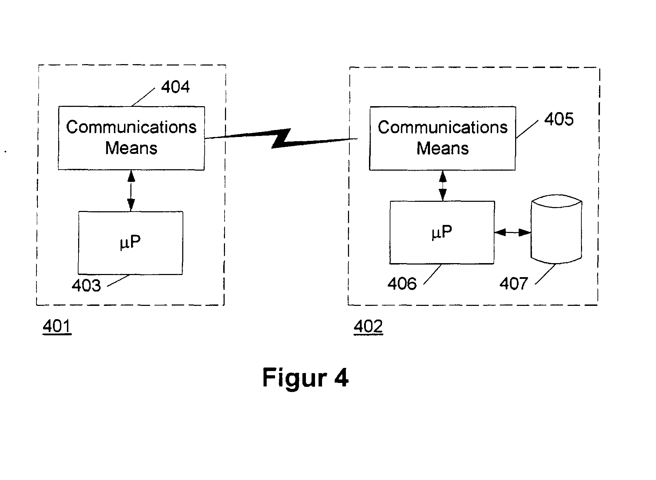

Figure 4 shows a schematic block diagram of an embodiment of the system according to the invention. Shown are a mobile communications unit (401) and a remote support location/system (402).

The mobile unit (401) has means (403) for generating a support request at said mobile unit, e.g. on the basis of one or more of the following: a user action, a message received from the remote support location (402) via first communications means (404), a time and/or error event, or a status check performed at a regular time interval, as described earlier in connection with the method.

The means (403) is preferably one or more general-purpose or specialised microprocessors or a combination thereof.

The mobile unit (401) also comprises first communications means (404) for sending a support message comprising information regarding the problem(s), as described above, to the remote support location (402) on the basis of the support request.

The mobile unit (401) may also comprise displaying means, input means, memory, storage, etc., which are not shown on the figure.

The support location (402) comprises second communications means (405) for receiving said support message, and means (406) for generating support information enabling the solving of the problem(s) e.g. with the use of a support person and/or one or more databases (407), memory, etc.

After the problem has been solved, the solution is sent to the mobile unit (401) via the second communications means (405) preferably as a (SMS) message or in another suitable format, e.g. using e-mail-, FTP-, HTTP-, WAP-protocols/carriers, etc., containing update and/or support information enabling the mobile unit to perform an automatic update of the settings e.g. in a memory (not shown), as described above.

Preferably, the means (406) for generating support information are one or more specialised or general-purpose microprocessors or a combination hereof.

The support location (402) may also comprise displaying means, storage, memory, input means, etc., which are not shown in the figure.

## Claims

1. A method of providing support to a mobile communications unit comprising the steps of
• generating a support request at said mobile unit,
• sending a support message to a remote support location on the basis of said support request, said support message relating to one or more problems,
• receiving said support message at said remote support location,
**characterized in that** said method further comprises the steps of
• generating support information enabling solving of said one or more problems at least partially, and
• providing said support information at said mobile unit.

2. A method according to claim 1, **characterized in that** said support request is generated on the basis of one or more of the following
• a user action,
• a message received from said remote support location,
• any internal event like a timer event, an error event, etc., or
• a status check performed at a regular time interval.

3. A method according to claims 1 - 2, **characterized in that** said support information is provided to the mobile unit by sending a message containing update and/or support information enabling the mobile unit to perform an automatic update of the settings thereby correcting said one or more problems.

4. A method according to claims 1 - 3, **characterized in that** said support information is comprised in an SMS message.

5. A method according to claims 1 - 4, **characterized in that** said support information comprises information regarding/representing one or more of the following
• one or more unit settings/parameters,
• unit identification,
• status of said mobile unit,
• an internal state of said mobile unit,
• at least one error code,
• at least one version number of software, hardware, firmware, etc. in said mobile communications unit,
• which hardware/physical/functional units/modules that are or have been connected with said mobile unit, or
• other relevant information.

6. A method according to claims 1 - 5, **characterized in that** said mobile unit is a mobile phone.

7. An method according to claims 1 - 6, **characterized in that** said sending of said support message to said remote support location is based on contact information relating to a phone number or an IP address, and that said contact information is one or more of the following
• stored in the mobile unit,
• stored on a SIM card,
• entered by a user, or
• a part of said message received from said remote support location.

8. A system for providing support to a mobile communications unit comprising
• means (403) for generating a support request at said mobile unit,
• first communications means (404) for sending a support message to a remote support location on the basis of said support request, said support message relating to one or more problems,
• second communications means (405) for receiving said support message at said remote support location,
**characterized in that** said system further comprises
• means (406) for generating support information enabling solving of said one or more problems at least partially, and
• providing said support information at said mobile unit via said second communications means (405).

9. A system according to claim 8, **characterized in that** said support request is generated on the basis of one or more of the following
• a user action,
• a message received from said remote support location,
• any internal event like a timer event, an error event, etc., or
• a status check performed at a regular time interval.

10. A system according to claims 8 - 9, **characterized in that** said support information is provided to the mobile unit by sending a message containing update and/or support information via second communications means (405) enabling the mobile unit to perform an automatic update of the settings, thereby correcting said one or more problems.

11. A system according to claims 8 - 10, **characterized in that** said support information is comprised in an SMS message.

12. A system according to claims 8 - 11, **characterized in that** said support information comprises information regarding/representing one or more of the following
• one or more unit settings/parameters,
• unit identification,
• status of said mobile unit,
• an internal state of said mobile unit,
• at least one error code,
• at least one version number of software, hardware, firmware, etc. in said mobile communications unit,
• which hardware/physical/functional units/modules that are or have been connected to said mobile unit, or
• other relevant information.

13. A system according to claims 8 - 12, **characterized in that** said mobile unit is a mobile phone.

14. A system according to claims 8 - 13, **characterized in that** said sending of said support message to said remote support location via said first communication means (404) is based on contact information relating to a phone number or an IP address , and that said contact information is one or more of the following
• stored in the mobile unit,
• stored on a SIM card,
• entered by a user, or
• a part of said message received from said remote support location.
